# DEMANDE DE BREVET EUROPEEN

(11) **EP 1 241 553 A1**
(43) Date de publication de la demande: **18.09.2002**
(21) Numéro de dépôt: 01106760.0
(22) Date de dépôt: 17.03.2001
(51) Int. Cl.: G06F 1/00

(54) **Module de sécurité amovible**

(71) Demandeur: eSecurium SA, 1227 Carouge (CH)
(72) Inventeur: Ritzenthaler, Patrice, 74100 Annemasse (FR)
(74) Mandataire: Wenger, Joel-Théophile

(57) **Abrégé**

Le but de la présente invention est de disposer d'un module de sécurité amovible utilisé pour l'encryption et la décryption des données, dont la sécurité ne peut être mise en défaut, quelle que soit l'étape d'utilisation des données.

Ce but est atteint par un module de sécurité amovible et monolithique (MSA) comprenant une unité de stockage sécurisé des clés (K), une unité centrale (Mcu) et une interface (INT) vers un module hôte, caractérisé en ce qu'il comprend au moins une unité cryptographique spécialisée (MCY) et une unité d'identification personnelle (ID).

## Description

La présente invention concerne un module de sécurité amovible, en particulier, un module incorporant tous les éléments pour assurer la sécurité des données reçues et transmises.

Il existe de tels modules, par exemple sous la forme d'une carte à puce, qui incluent les clés de sécurité pour l'encryption des données.

Selon ce type d'utilisation, c'est l'ordinateur sur lequel se connecte la carte à puce qui exécute les différentes opérations de cryptage. Même si les échanges entre l'ordinateur et le module de sécurité se font sous forme cryptée, les clés sont transférées dans l'ordinateur hôte pour que les opérations d'encryption puissent être effectuées.

Ainsi, il existe une possibilité pour que la mémoire de l'ordinateur soit utilisée pour la lecture d'information confidentielle et il suffit de cet intrusion pour que toute la sécurité placée dans le module de sécurité devienne caduque. Un tel système est décrit dans le document EP 0 471 373. Le module 10 contenant le microprocesseur est connecté avec un module de sécurité 12 contenant les clés. Ce module est amovible et la communication entre ce module et le microprocesseur central s'effectue par le biais de données encryptées par une clé de travail.

Lors de l'utilisation d'un tel module, il est généralement demandé d'introduire un code secret afin de permettre l'accès ou l'utilisation des données contenues dans ledit module. Ce code est introduit sur le clavier de l'ordinateur principal, ce qui ouvre une nouvelle brèche dans la sécurité des données. En effet, des programmes espions existent et sont spécialement conçus pour intercepter de tels codes.

Ainsi, le but de la présente invention est de disposer d'un module de sécurité amovible dont la sécurité ne peut être mis en défaut, quelle que soit l'étape d'utilisation des données.

Ce but est atteint par un module de sécurité amovible et monolithique comprenant une unité de stockage sécurisé des clés, une unité de gestion et une interface vers un module hôte, caractérisé en ce qu'il comprend au moins un module cryptographique spécialisé et une unité d'identification personnelle.

Ce module amovible comprend ainsi tous les éléments nécessaires à la sécurisation des données. Ces dernières sont transmises au module par l'interface et encryptées directement dans ce module par l'unité cryptographique. Les clés sont fournies en interne à ce module et ne sont jamais accessibles vers l'extérieur.

Il est dit "monolithique" car les différents blocs sont indissociables les uns des autres sans détruire la fonctionnalité du module.

Selon l'invention, le module comporte des moyens d'identification du porteur, selon des moyens connus en soi. Il s'agit du classique clavier, que ce soit numérique ou alphanumérique, ou d'autres moyens tels que la reconnaissance d'empreintes digitales ou empreintes vocales, voire la lecture d'une carte à puce.

L'interface de ce module peut être de type PCMCIA, RS232, USB, par onde radio (Blue Tooth), par infrarouge (IRDA) ou de type quelconque. Dans une phase d'encryptage, les données en clair entrent dans le module, qui, après identification du porteur, les encryptent selon le protocole choisi et grâce aux clés tenues secrètes.

Selon une forme de réalisation, les échanges entre ce module et son hôte se font sous forme encryptée, au moyen d'une clé dite de session.

Cette clé est générée aléatoirement de part et d'autre de la communication pour former une clé unique de cession. Une fois les échanges terminés, cette clé est détruite et une autre sera générée lors des prochains transferts.

Par module cryptographique on entend un module spécialisé en charge des opérations d'encryptage/décryptage. Il s'agit par exemple d'un module DES, Triple-DES, RSA, AES ou IDEA. Selon la technologie disponible, ce module est réalisé en électronique câblée ou par logiciel si les performances le permettent.

Selon un mode de réalisation, ce module comprend un affichage pour piloter l'introduction du code secret, ou simplement disposer d'une indication lumineuse ou sonore.

L'invention sera mieux comprise grâce à la description détaillée qui va suivre et qui se réfère à la figure unique, qui est donnée à titre d'exemple nullement limitatif, représentant le module de l'invention.

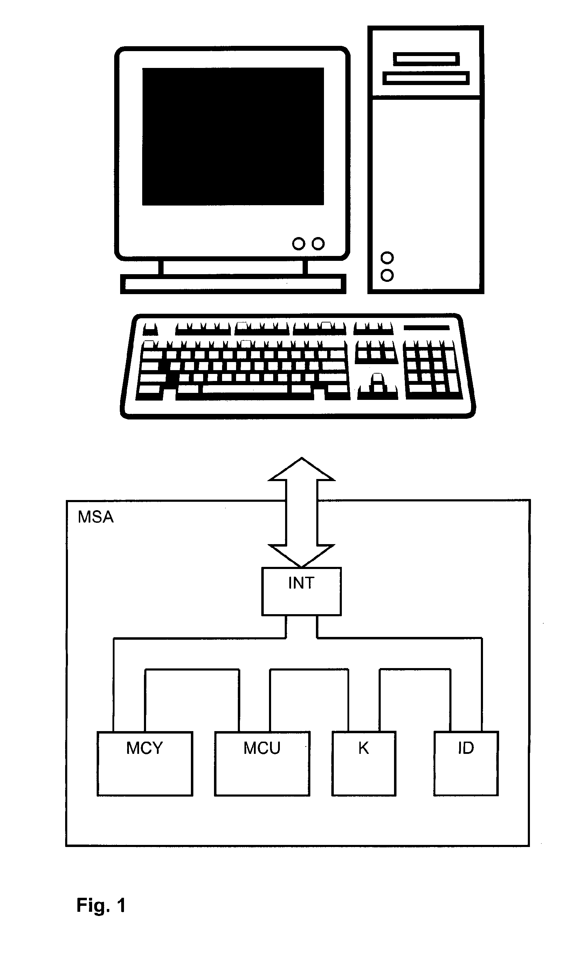

La figure 1 illustre le module de sécurité amovible MSA de l'invention qui peut être connecté à un module hôte, dans notre exemple un ordinateur. Ce module comprend un premier bloc d'interface INT. Ce bloc a pour tâche d'adapter les signaux extérieurs au bus interne. Du fait que le module peut être compatible avec de nombreux standard, ce bloc sera adapté en fonction du mode de transmission choisi. Selon notre exemple, cet interface est du type USB.

Le centre du module MSA est l'unité centrale MCU qui orchestre le fonctionnement du tout. Par un bus interne, ce bloc communique avec un bloc mémoire non volatile K stockant les clés secrètes d'encryption. Il est à noter que selon le type de réalisation, ce bloc peut être directement intégré dans l'unité centrale MCU.

Le bloc cryptographique MCY est représenté comme un bloc indépendant dans notre exemple. En effet, pour les besoins actuels de cryptographie, il est usuel d'utiliser un bloc spécifique réalisé en électronique câblée. Selon notre exemple, il s'agit d'un bloc du type DES, RSA ou IDEA. Selon les besoins, le module MSA peut comprendre plusieurs de ces blocs cryptographiques pour supporter différents protocoles d'encryption.

Le bloc ID est spécifiquement dédié à l'identification personnelle du porteur du module. Il est rappelé ici que ce module est amovible et qu'il contient tous les éléments pour libérer l'accès aux données confidentielles. C'est pourquoi il est nécessaire que ce bloc ID soit intégré directement dans le module de sécurité amovible MSA.

Selon une première forme de l'invention, ce bloc à la forme d'un clavier numérique sur lequel est saisi le numéro d'identification personnel. Selon le type de réalisation d'un tel clavier, par exemple si un circuit dédicacé à ce type d'opération est utilisé, la communication entre ce circuit et l'unité centrale fera l'objet de toutes les attentions.

Cette attention est également présente pour tout autre type de bloc d'identification, par exemple un bloc de reconnaissance d'empreintes digitales ou vocales. En effet, la complexité de ces blocs font qu'ils disposent de leur propre unité centralisée en charge d'exécuter les opérations de reconnaissance. La liaison entre ce bloc et l'unité centrale MCU est protégée par l'encryption des données échangées.

Le bloc d'identification ID peut avantageusement être complété par un bloc d'affichage (non représenté). Il est ainsi possible d'inviter l'utilisateur à introduire son code, ou simplement indiquer l'état du module.

Ces différents blocs sont intégrés dans une entité compacte de la taille d'un téléphone portable par exemple. Ils sont intégrés sur un même support en silicium dans la mesure du possible et peuvent être protégés pour empêcher l'accès aux clés secrètes.

A ce module peut s'ajouter un lecteur de carte, soit magnétique, soit à puce. Le module sert alors de sous ensemble d'authentification et d'encryption/décryption. Les données sensibles de l'utilisateur étant traitées de la sorte dans le module directement.

Une des applications de ce module est l'édition de données sécurisées. Pour des raisons de sécurité, il est prévu de conserver les données stockées sur les unités de stockage de l'ordinateur hôte sous forme encryptée. Ainsi, chaque fois qu'un programme désire ouvrir le fichier demandé, par exemple un traitement de texte ou un gestionnaire de messages électroniques, les données sont préalablement transmises au module de sécurité avant d'être disponible, en clair, pour le programme. Inversement, lors de la sauvegarde, ces données en clair sont envoyées au module de sécurité pour être encryptées puis, sous cette forme, sont stockées dans le disque dur.

## Revendications

**1.** Module de sécurité amovible et monolithique comprenant une unité de stockage sécurisé des clés, une unité centrale (MCU) et un interface (INT) vers un module hôte, **caractérisé en ce qu'**il comprend au moins une unité cryptographique spécialisée (MCY) et au moins une unité d'identification personnelle (ID).

**2.** Module de sécurité amovible et monolithique selon la revendication 1, **caractérisé en ce que** l'unité d'identification (ID) personnelle est un clavier.

**3.** Module de sécurité amovible et monolithique selon la revendication 1, **caractérisé en ce que** l'unité d'identification personnelle (ID) est une unité de reconnaissance d'empreintes digitales.

**4.** Module de sécurité amovible et monolithique selon la revendication 1, **caractérisé en ce que** l'unité d'identification personnelle est une unité de reconnaissance d'empreintes vocales.

**5.** Module de sécurité amovible et monolithique selon la revendication 1, **caractérisé en ce que** l'unité d'identification personnelle est un interface de lecture de carte à puce.

**6.** Module de sécurité amovible et monolithique selon les revendications 2 à 5, **caractérisé en ce que** l'unité d'identification personnelle (ID) transmet les informations d'identification vers l'unité centrale (MCU) sous forme encryptée.

**7.** Module de sécurité amovible et monolithique selon les revendications 1 à 6, **caractérisé en ce que** l'unité cryptographique spécialisée (MCY) est de type DES, Triple-DES, AES, RSA ou IDEA.

**8.** Module de sécurité amovible et monolithique selon l'une des revendications précédentes, **caractérisé en ce qu'**il comprend un lecteur de carte magnétique ou à puce.

**9.** Module de sécurité amovible et monolithique selon l'une des revendications précédentes, **caractérisé en ce que** l'interface (INT) est de type PCMCIA, IRDA, RS232, USB ou Blue Tooth.

**9.** Module de sécurité amovible et monolithique selon l'une des revendications précédentes, **caractérisé en ce qu'**il comprend un dispositif d'affichage numérique ou alphanumérique.
